# EUROPEAN PATENT APPLICATION

(11) **EP 4 564 514 A1**
(43) Date of publication of application: **04.06.2025**
(21) Application number: 22969849.3
(22) Date of filing: 30.12.2022
(51) Int. Cl.: H01M 10/058

(54) **ELECTRODE ASSEMBLY, BATTERY CELL, BATTERY AND ELECTRIC DEVICE**

(71) Applicant: CONTEMPORARY AMPEREX TECHNOLOGY (HONG KONG) LIMITED, Central (HK)
(72) Inventor: SUN, Jingxuan, Ningde, Fujian 352100 (CN); LI, Ying, Ningde, Fujian 352100 (CN)
(74) Representative: Laufhütte, Dieter
(86) International application number: PCT/CN2022/144229
(87) International publication number: WO 2024/138707

(57) **Abstract**

The present disclosure discloses an electrode assembly, a cell, a battery, and an electrical device, which belongs to the field of batteries technologies. The electrode assembly (30) includes a positive electrode plate (31), a negative current collector (32), and a support layer (33). The positive electrode plate (31) and the negative current collector (32) are arranged in a first direction. The negative current collector (32) has a first side surface and a second side surface opposite to the first side surface in the first direction. The support layer (33) is disposed on at least part of the first side surface and/or at least part of the second side surface of the negative current collector (32).

## Description

### FIELD

The present disclosure relates to the field of battery technologies, and more particularly, to an electrode assembly, a cell, a battery, and an electrical device.

### BACKGROUND

In the related art, during charging of a battery, a negative current collector experiences a precipitation/deposition of metal (such as lithium, sodium, and potassium), resulting in expansion of a volume of a negative electrode. At the same time, deposition thickness of the metal at different positions of the negative current collector has poor uniformity, resulting in irregular expansion of the negative current collector. An electrode assembly deforms under a non-uniform expansion force, making the tab susceptible to local pulling and breakage. In this way, battery safety accidents are caused, resulting in poor safety and reliability of the battery.

### SUMMARY

An embodiment of the present disclosure provides an electrode assembly, a cell, a battery, and an electrical device, capable of avoiding cracks and breakage of a tab.

In a first aspect, an embodiment of the present disclosure provides an electrode assembly. The electrode assembly includes a positive electrode plate, a negative current collector, and a support layer. The positive electrode plate and the negative current collector are arranged in a first direction. The negative current collector has a first side surface and a second side surface opposite to the first side surface in the first direction. The support layer is disposed on the negative current collector, and at least part of the first side surface and/or at least part of the second side surface of the negative current collector is provided with the support layer.

In the above technical solution, the support layer is disposed at the at least part of the first side surface and/or the at least part of the second side surface of the negative current collector. The support layer can limit a non-uniform growth of metal deposition on a negative electrode plate and reduce irregular expansion of the negative electrode plate during charging, to reduce pulling on the tab. Therefore, cracks and breakages of the tab are avoided, thereby improving the safety and reliability of the cell.

In some embodiments, the support layer includes a first support layer and a second support layer. The first support layer and the second support layer are disposed on the first side surface and the second side surface, respectively.

In the above technical solution, the first support layer and the second support layer are disposed on the first side surface and the second side surface, respectively, such that the two side surfaces of the negative current collector in the first direction remain flat during the charging, avoiding a non-uniform expansion of the negative current collector in the first direction to reduce stress on the tab, thereby improving the safety and the reliability of the cell.

In some embodiments, the support layer is sleeved on an outside surface of the negative current collector.

In the above technical solution, the support layer is sleeved on the outside surface of the negative current collector. During the charging, the negative current collector deposits metallic ions and thus becomes larger in its volume. The support layer can limit the non-uniform growth of the metal deposition on the negative electrode plate on the outside surface of the negative current collector to avoid the non-uniform expansion of the negative current collector.

In some embodiments, the support layer further includes a connection support layer, and the negative current collector further has an outer peripheral surface connected between the first side surface and the second side surface. The connection support layer is connected between the first support layer and the second support layer.

In the above technical solution, the support layer can be sleeved on a circumferential outside surface of the negative current collector. During the charging, the support layer can limit the non-uniform growth of the metal deposition on the negative electrode plate on the circumferential side surface of the negative current collector to avoid the non-uniform expansion of the negative current collector in a circumferential direction of the negative current collector.

In some embodiments, the first support layer, the second support layer, and the connection support layer are integrally formed.

In the above technical solution, the support layer can be integrally formed to facilitate production of the support layer. At the same time, the integrally formed support layer can also ensure consistency of performance of the support layer in all directions to avoid the non-uniform expansion of the negative current collector.

In some embodiments, an orthographic projection area of the support layer in the first direction is greater than or equal to an orthographic projection area of the positive electrode plate in the first direction.

In the above technical solution, the support layer can separate the positive electrode plate from the negative current collector. During the charging, the volume of the negative current collector becomes larger. When the negative current collector expands the support layer, since S1≥S2, it can be ensured that when the support layer expands outward and extrudes the positive electrode plate, the entire positive electrode plate is extruded by the support layer, preventing tilting and a significant movement of the positive electrode plate caused by partial stress on the positive electrode plate, thereby improving stability of the positive electrode plate.

In some embodiments, the electrode assembly further includes a separator disposed between the positive electrode plate and the negative current collector and configured to separate the positive electrode plate and the negative current collector.

In the above technical solution, the separator can prevent a short circuit between the positive electrode plate and the negative current collector, and allow the electrode assembly to form a charging and discharging circuit to ensure a charging and discharging function of the electrode assembly.

In some embodiments, the first support layer, the separator is integrally formed with the adjacent support layer.

In the above technical solution, the integral forming of the separator and the support layer can reduce a number of components of the electrode assembly to facilitate the production of the electrode assembly.

In some embodiments, the support layer and the separator are made of a same material.

In the above technical solution, the support layer and the separator are made of the same material to ensure that the electrode assembly can achieve charging and discharging functions, and avoid the short circuit in the electrode assembly to improve the safety of the electrode assembly.

In some embodiments, the support layer and the separator are made of a same material.

In the above technical solution, the strength of the support layer is greater than or equal to the strength of the separator, which avoids breakage and failure of the support layer. In this way, the safety and the reliability of the electrode assembly are improved.

In some embodiments, the support layer is made of a macromolecule polymer.

In the above technical solution, the support layer made of the macromolecule polymer has good strength, heat resistance, corrosion resistance, and electrical insulation to meet usage requirements of the electrode assembly.

In some embodiments, an initial thickness a of the support layer and a thickness b of the negative current collector in a fully charged state satisfy a relation expression: 1%≤a/b≤50%.

In the above technical solution, the initial thickness a of the support layer and the thickness b of the negative current collector in the fully charged state satisfy relation expression: 1%≤a/b≤50%, to reduce an impact of the support layer on capacity of the cell while ensuring reliability of the support layer.

In some embodiments, the initial thickness a of the support layer and the thickness b of the negative current collector in the fully charged state further satisfy a relation expression: 2%≤a/b≤40%.

In the above technical solution, the initial thickness a of the support layer and the thickness b of the negative current collector in the fully charged state satisfy the relation expression: 2%≤a/b≤40%, to further reduce the impact of the support layer on the capacity of the cell while ensuring the reliability of the support layer.

In some embodiments, the negative current collector includes a negative-electrode active material layer on an outer surface of the negative current collector.

In the above technical solution, the negative electrode active material layer is disposed on the outer surface of the negative current collector, and the active material layer can embed or extract metallic ions to perform an electrochemical reaction on the electrode assembly.

In some embodiments, the support layer is elastic.

In the above technical solution, the support layer is elastic. During the charging, in response to the volume of the negative current collector increasing due to the metal deposition on the negative current collector, the support layer is expanded by the negative current collector, and the support layer elastically deforms and exerts a reaction force on the negative current collector. And a part of the negative current collector with a larger thickness of metal deposition receives a greater reaction force from the support layer, and a part of the negative current collector with a smaller thickness of metal deposition receives a smaller reaction force from the support layer. Therefore, under the condition that the support layer constrains the negative current collector, the thickness of metal deposition at different parts of the negative current collector tends to be consistent, ensuring that the volume of the negative current collector increases uniformly.

In some embodiments, the negative current collector comprises a tab, the tab having a stretchable portion configured to provide space for stretching the tab.

In the above technical solution, the stretchable portion is disposed at the tab. When the volume of the negative current collector changes, the stretchable portion can stretch and retract to maintain an electrical connection between the tab and the negative current collector, and prevent the cracks or even the breakage of the tab generated by the pulling on the tab due to the excessive expansion of the thickness of the electrode assembly, thereby increasing reliability of the battery.

In some embodiments, the stretchable portion includes at least one bending structure.

In the above technical solution, the bending structure can realize folding of a length of the tab to provide the additional space for stretching the tab when the volume of the negative current collector changes, and avoid the cracks or even the breakage of the tab generated by the pulling on the tab due to the excessive volume change of the thickness of the electrode assembly.

In some embodiments, the support layer is sleeved on an outside surface of the negative current collector, and a tab penetrates the support layer.

In the above technical solution, the tab can export electric energy of the electrode assembly and supply power to external electrical equipment.

In a second aspect, an embodiment of the present disclosure provides a cell. The cell includes the above-mentioned electrode assembly.

In a third aspect, an embodiment of the present disclosure provides a battery. The battery includes the above-mentioned cell.

In a fourth aspect, an embodiment of the present disclosure provides an electrical device. The electrical device includes the above-mentioned battery.

### BRIEF DESCRIPTION OF THE DRAWINGS

In order to clearly explain technical solutions of embodiments of the present disclosure, drawings used in the embodiments are briefly described below. It should be understood that the drawings as described below merely illustrate some embodiments of the present disclosure, and should not be construed as limiting the scope. Based on these drawings, other drawings can be obtained by those skilled in the art without creative effort.
FIG. 1 is a schematic structural view of a vehicle according to some embodiments of the present disclosure.
FIG. 2 is an exploded view of a structure of a battery according to some embodiments of the present disclosure.
FIG. 3 is a schematic diagram of a cell according to some embodiments of the present disclosure.
FIG. 4 is a schematic structural view of an electrode assembly before charging according to some embodiments of the present disclosure.
FIG. 5 is a schematic structural view of an electrode assembly after being fully charged according to some embodiments of the present disclosure.
FIG. 6 is a schematic diagram of a cell where a bending structure of a tab is in a retracted state according to some embodiments of the present disclosure.
FIG. 7 is a schematic diagram of a cell where a bending structure of a tab is in a stretched state according to some embodiments of the present disclosure.
FIG. 8 is a schematic structural view of a stretchable portion of the tab according to some embodiments of the present disclosure.

### DETAILED DESCRIPTION

The embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain rather than limit the present disclosure.

In order to make objects, technical solutions, and advantages of the present disclosure more apparent, technical solutions according to embodiments of the present disclosure will be described clearly and completely below with reference to the accompanying drawings of the embodiments of the present disclosure. Obviously, the embodiments described below are only a part of the embodiments of the present disclosure, rather than all embodiments of the present disclosure. On a basis of the embodiments of the present disclosure, all other embodiments obtained by those skilled in the art without creative labor shall fall within the protection scope of the present disclosure.

Unless otherwise defined, all technical and scientific terms used herein have the same meaning as commonly understood by those skilled in the art of the present disclosure. Terms in the specification of the present disclosure herein are only used for the purpose of describing specific embodiments, and are not intended to limit the present disclosure. In addition, the terms "including" and "having" and any variants thereof as used in the description of the embodiments of the present disclosure, the appended claims, and the above accompanying drawings are intended to cover non-exclusive inclusions. Terms "first", "second", etc. in the embodiments of the present disclosure, the appended claims, and the above accompanying drawings are not intended for the description of a specific order or a priority relationship, but rather distinguish different objects.

Reference herein to "an embodiment" means that a particular feature, structure or characteristic described in combination with the embodiment can be included in at least one embodiment of the present disclosure. The appearance of this phrase in various places in the specification are not necessarily all referring to the same embodiment, nor is it an independent or alternative embodiment that is mutually exclusive of other embodiments.

In the description of the embodiments of the present disclosure, unless specified or limited otherwise, the technical terms "mounted," "connected," "coupled" and "fixed" are understood broadly, such as a fixed connection or a detachable connection or connection as one piece; mechanical connection or electrical connection; direct connection or indirect connection through an intermediate; internal communication of two components. For those skilled in the art, the specific meaning of the above-mentioned terms in the embodiments of the present disclosure can be understood according to specific circumstances.

Terms "and/or" in the present disclosure describes an association relationship between correlated objects, including three relationships. For example, "A and/or B" can mean A only, B only, or both A and B. In addition, the symbol "/" in the present disclosure generally indicates an "or" relationship between the correlated objects preceding and succeeding the symbol.

In the embodiments of the present disclosure, the same reference numerals represent the same components, and detailed descriptions of the same components in different embodiments are omitted for the sake of simplicity. It should be understood that a thickness, a length, a width, and other dimensions of various components in the embodiments of the present disclosure, as well as an overall thickness, length, width, and other dimensions of an integrated device illustrated in the drawings, are only exemplary illustrations and should not constitute any limitation to the present disclosure.

In the present disclosure, "plurality of" means two or more (including two).

In the present disclosure, a cell may include a lithium ion secondary battery, a lithium ion primary battery, a lithium sulfur battery, a sodium lithium ion battery, a sodium ion battery or a magnesium ion battery, etc., which are not limited in the embodiments of the present disclosure. The cell may be in a shape of a cylinder, a flat body, a cuboid or other shapes, which are not limited in the embodiments of the present disclosure. The cell is generally divided into three types based on a packaging method: a cylinder-shaped cell, a square-shaped cell, and a soft-pack cell, which are not limited in the embodiments of the present disclosure.

The battery mentioned in the embodiments of the present disclosure refers to a single physical module including one or more cells to provide a higher voltage and capacity. For example, the battery mentioned in the present disclosure may include a battery module or a battery pack. The battery generally includes a case for packaging one or more cells or a plurality of battery modules. The case can prevent liquid or other foreign matters from affecting charging or discharging of the cell.

The cell may include a housing, an electrode assembly, and an electrolyte. The housing is configured to accommodate the electrode assembly, and the electrolyte. The electrode assembly may include a positive electrode plate, a negative current collector, and a separator. Operation of the cell primarily relies on a movement of metallic ions between the positive electrode plate and the negative current collector. The positive electrode plate includes a positive electrode current collector and a positive electrode active material layer. The positive electrode active material layer is coated at a surface of the positive electrode current collector. A part of the positive electrode current collector that is not coated with the positive electrode active material layer protrudes from a part that has been coated with the positive electrode active material layer. The part that is not coated with the positive active material layer serves as a positive electrode tab. A lithium-ion battery is taken as an example, a material of a positive electrode current collector may be aluminum, and a positive electrode active material may be lithium cobalt oxide, lithium iron phosphate, ternary lithium, lithium manganate, etc. A surface of the negative current collector may or may not be coated with the negative electrode active material layer. The material of the negative current collector may be copper, and the negative electrode active material may be carbon or silicon. To ensure no fusing during passing through a high current, a plurality of positive electrode tabs is provided and stacked together, and a plurality of negative electrode tabs is provided and stacked together.

A material of the separator may be Polypropylene (PP), Polyethylene (PE), etc. In addition, the electrode assembly may have a winding structure or a laminated structure, and the embodiments of the present disclosure are not limited thereto.

In recent years, new energy vehicles have developed by leaps and bounds. In the field of electric vehicles, power batteries, as the power source of electric vehicles, play an important and irreplaceable role. The battery is composed of a case and a plurality of batteries in the case. Batteries, as the core components of the new energy vehicles, have high requirements in terms of safety and service life.

It was found that in a general power battery, during the charging of the battery, the negative current collector experiences a precipitation/deposition of metals (such as lithium, sodium, and potassium), resulting in the expansion of the volume of the negative electrode. At the same time, deposition thickness of the metal at different positions of the negative current collector has poor uniformity, resulting in irregular expansion of the negative current collector. The electrode assembly deforms under the non-uniform expansion force, making the tab susceptible to local pulling and breakage. In this way, battery safety accidents are caused, resulting in poor safety and reliability of the battery.

Based on the above considerations, in order to solve the problem of the battery safety accidents caused by the breakage of the tab due to the irregular expansion of the negative current collector during the charging, an electrode assembly is designed after in-depth research. The electrode assembly includes a positive electrode plate, a negative current collector, and a support layer. The positive electrode plate and the negative current collector are arranged in a first direction. The negative current collector has a first side surface and a second side surface opposite to the first side surface in the first direction. The support layer is disposed on at least part of the first side surface and/or at least part of the second side surface of the negative current collector.

In the electrode assembly with this structure, the support layer can limit a non-uniform growth of metal deposition on the negative electrode plate and reduce irregular expansion of the negative electrode plate during the charging, to reduce pulling on the tab. Therefore, cracks and breakages of the tab are avoided, thereby improving the safety and reliability of the cell.

The batteries disclosed in the embodiments of the present application can be used in, but are not limited to, electrical devices such as vehicles, ships, or aircrafts. A power supply system for the electrical device can be composed of the battery disclosed in the present disclosure, which helps to improve applicable ranges of the battery and improve the safety and reliability of the battery.

The embodiments of the present disclosure provide an electrical device that uses a battery as a power supply. The electrical device may be, but is not limited to, a mobile phone, a tablet, a laptop, an electric toy, an electric tool, a battery car, an electric vehicle, a ship, a spacecraft, etc. The electric toy can include a fixed or mobile electric toy, such as a game console, an electric car toy, an electric ship toy, an electric airplane toy, etc. The spacecraft can include an airplane, a rocket, a space shuttle, a spaceship, etc.

For convenience of explanation in the following embodiments, an electrical device according to an embodiment of the present disclosure is described using a vehicle 1000 as an example.

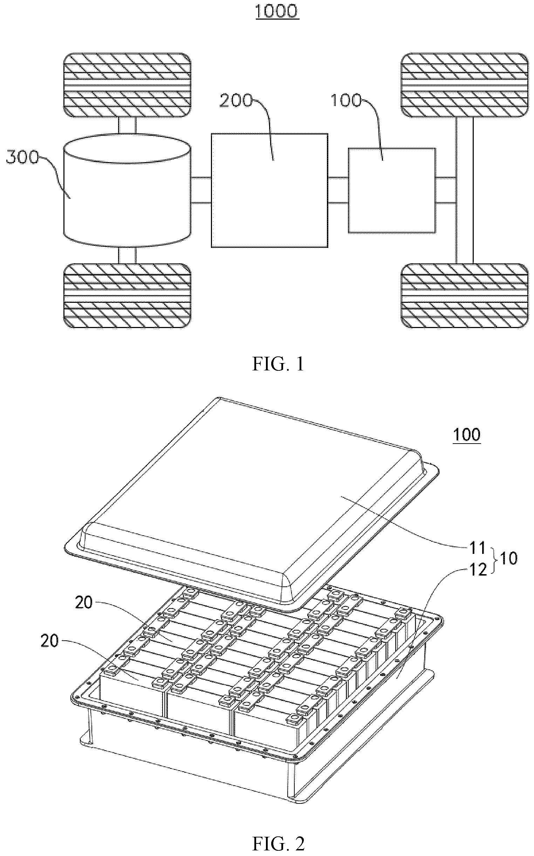

Referring to FIG. 1, FIG. 1 is a schematic structural view of a vehicle 1000 according to some embodiments of the present disclosure. The vehicle 1000 may be a fuel vehicle, a gas vehicle, or a new energy vehicle. The new energy vehicle may be a pure electric vehicle, a hybrid vehicle, an extended-range vehicle, etc. The vehicle 1000 is provided with a battery 100 internally. The battery 100 may be disposed at a bottom, a head, or a tail of the vehicle 1000. The battery 100 may be configured to supply power to the vehicle 1000. For example, the battery 100 may serve as an operating power source for the vehicle 1000. The vehicle 1000 may also include a controller 200 and a motor 300. The controller 200 is configured to control the battery 100 to supply power to the motor 300, for example, to meet operational power consumption requirements for starting, navigation, and driving of the vehicle 1000.

In some embodiments of the present disclosure, the battery 100 can not only serve as an operating power supply for the vehicle 1000, but also can serve as a drive power supply for the vehicle 1000, so that the battery 100 replaces or partially replaces fuel or natural gas to provide driving power for the vehicle 1000.

Referring to FIG. 2, FIG. 2 is an exploded view of a structure of a battery 100 according to some embodiments of the present disclosure. The battery 100 includes a case 10 and a plurality of cells 20 accommodated in the case 10. The case 10 is configured to define a fitting space for the cell 20, and the case 10 may have a variety of structures. In some embodiments, the case 10 may include a first body 11 and a second body 12. The first body 11 and the second body 12 cover each other. The fitting space defined by the first body 11 and the second body 12 jointly is configured to accommodate the cell 20. The second body 12 may have a hollow structure with one end open, and the first body 11 may be a plate-like structure. The first body 11 covers an open side of the second body 12 to allow the first body 11 and the second body 12 to jointly define the fitting assembly space. Each of the first body 11 and the second body 12 may also be a hollow structure with one side open, and the open side of the first body 11 covers the open side of the second body 12. Of course, the case 10 defined by the first body 11 and the second body 12 may be in various shapes, such as a cylinder, a cuboid, etc.

In the battery 100, a plurality of cells 20 may be connected in series, in parallel, or in series and parallel. The expression "in series and parallel" means that there are both series and parallel connections in the plurality of cells 20. The plurality of cells 20 may be directly connected in series, or in parallel, or in series and parallel, and then a whole composed of the plurality of cells 20 may be accommodated in the case 10. Of course, the battery 100 may also be in a form where the plurality of cells 20 is first connected in series or in parallel or in series and parallel to compose the battery module, the plurality of battery modules is then connected in series or in parallel or in series and parallel to form a whole, and the whole is accommodated in the case 10. The battery 100 may also include other structures. For example, the battery 100 may further include a busbar configured for an electrical connection between the plurality of cells 20.

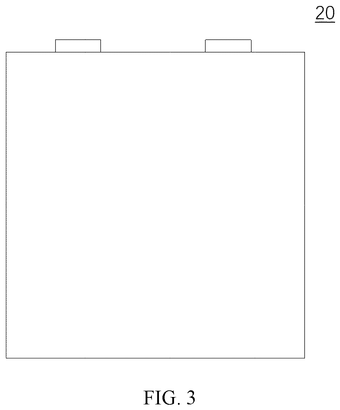

Referring to FIG. 3, the present disclosure further provides a cell 20. The cell 20 may include a housing, an electrode assembly, and an electrolyte. The housing is configured to accommodate the electrode assembly and the electrolyte. Each cell 20 may be a secondary battery, a primary battery, a lithium sulfur battery, a sodium ion battery, or a magnesium ion battery 400, etc., but is not limited thereto. The cell 20 may be a shape of a cylinder, a flat body, a cuboid or other shapes. Exemplarily, in FIG. 3, the cell 20 is in a cuboid shape.

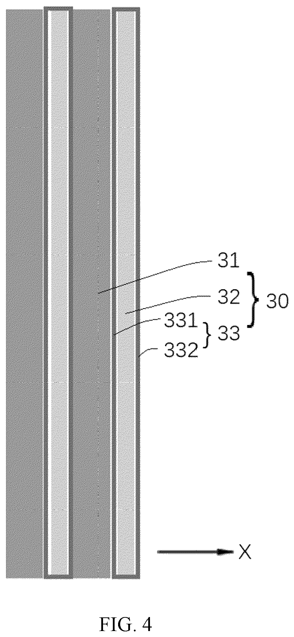

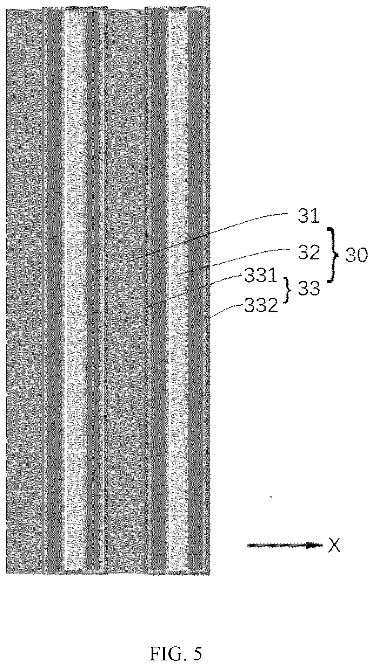

According to some embodiments of the present disclosure, referring to FIG. 3, and further referring to FIGS. 4 and 5, the present disclosure provides an electrode assembly 30. The electrode assembly 30 includes a positive electrode plate 31, a negative current collector 32, and a support layer 33. The positive electrode plate 31 and the negative current collector 32 are arranged in a first direction X. The negative current collector 32 has a first side surface and a second side surface opposite to the first side surface in the first direction X. The support layer 33 is disposed on at least part of the first side surface and/or at least part of the second side surface of the negative current collector 32.

The positive electrode plate 31 and the negative current collector 32 may be spaced apart from each other in the first direction X, and the metallic ions may move between the positive electrode plate 31 and the negative current collector 32 to realize the charging and the discharging of the cell 20. When the cell 20 has a laminated structure, each of the first side surface and the second side surface of the negative current collector 32 can face the positive electrode plate 31. The support layer 33 may be disposed on the outside surface of the negative current collector 32. In some examples, the support layer 33 is disposed on the at least part of the first side surface of the negative current collector 32. In other examples, the support layer 33 is disposed on the at least part of the second side surface of the negative current collector 32. In some other examples, the support layer 33 is disposed on the at least part of the first side surface and the at least part of the second side surface of the negative current collector 32. That is, the support layer 33 fully covers or partially covers the side surfaces of the negative current collector 32 in the first direction X, and the first direction X may be a thickness direction of the negative current collector 32.

It can be understood that the negative current collector 32 may serve as a negative electrode plate, and the negative current collector 32 may be coated with an active material layer and/or only have a primer layer. A primary component of the primer layer is at least one of conductive carbon, binder, and other substances. The active material layer may be used to enhance an ion transmission rate. The primer layer may be used to improve adhesion to facilitate processing of the electrode plate. The negative current collector 32 may only be coated with the active material layer, or may only have a primer layer, or may be coated with an active material layer and have a primer layer.

It should be noted that the support layer 33 allows metallic ions to pass through and prevent electrons from passing through to ensure charging and discharging performance of the electrode assembly 30. At the same time, the support layer 33 has a certain strength and elasticity. During the charging of the cell 20, the negative current collector 32 becomes larger in the volume due to the deposition of the metallic ions, and the support layer 33 can expand synergistically with the increased volume of the negative current collector 32. The support layer 33 can limit the non-uniform growth of the metal deposition on the negative electrode plate, allowing the metallic ions to be uniformly deposited on the negative electrode, and reducing a thickness difference of the metal deposition on the first side surface and/or the second side surface of the negative current collector 32. Therefore, the side surfaces of the negative current collector 32 in the first direction X remain flat after the volume of the negative current collector 32 increases. Under the same charging capacity, inclination and displacement of the negative current collector 32 in the first direction X can be reduced, thereby reducing displacement of the negative current collector 32 relative to a tab 321 during the charging, thus preventing cracks and breakage of the tab 321 generated by pulling on the tab 321.

In the above technical solution, the support layer 33 is disposed on the at least part of the first side surface and/or the at least part of the second side surface of the negative current collector 32. The support layer 33 can limit the non-uniform growth of the metal deposition on the negative electrode plate and reduce the irregular expansion of the negative electrode plate during the charging, to reduce the pulling on the tab 321. Therefore, cracks and breakages of the tab 321 are avoided, thereby improving the safety and reliability of the cell 20.

According to some embodiments of the present disclosure, referring to FIGS. 4 and 5, the support layer 33 includes a first support layer 331 and a second support layer 332. The first support layer 331 and the second support layer 332 are disposed on the first side surface and the second side surface, respectively.

The first side surface and the second side surface are two side surfaces of the negative current collector 32 in the first direction X, respectively. The first support layer 331 can cover outside the first side surface and can reduce a non-uniform growth of metal deposition on the first side surface of the negative current collector 32 to keep the first side surface flat during the charging. The second support layer 332 can cover outside the second side surface and can reduce a non-uniform growth of metal deposition on the second side surface of the negative current collector 32 to keep the second side surface flat during the charging.

In the above technical solution, the first support layer 331 and the second support layer 332 are disposed on the first side surface and the second side surface, respectively, such that the two side surfaces of the negative current collector 32 in the first direction X remain flat during the charging, avoiding a non-uniform expansion of the negative current collector 32 in the first direction X to reduce stress on the tab 321, thereby improving the safety and the reliability of the cell 20.

According to some embodiments of the present disclosure, referring to FIGS. 4 and 5, the support layer 33 is sleeved on an outside surface of the negative current collector 32.

The support layer 33 covers the first side surface and the second side surface of the negative current collector 32 on the outside surface of the negative current collector 32. In some examples, the support layer 33 is fully wrapped around the outside surface of the negative current collector 32. That is, any outside surface of the negative current collector 32 is covered by the support layer 33. In some other examples, the support layer 33 has a groove-shaped structure with one end open to facilitate a fitting of the support layer 33. In some other examples, the support layer 33 has a cylinder-shaped structure with two ends open to facilitate the fitting of the support layer 33.

In the above technical solution, the support layer 33 is sleeved on the outside surface of the negative current collector 32. During the charging, the negative current collector 32 deposits the metallic ions and thus becomes larger in its volume. The support layer 33 can limit the non-uniform growth of the metal deposition on the negative electrode plate on the outside surface of the negative current collector 32 to avoid the non-uniform expansion of the negative current collector 32.

According to some embodiments of the present disclosure, the support layer 33 further includes a connection support layer, and the negative current collector 32 further has an outer peripheral surface connected between the first side surface and the second side surface. The connection support layer is connected between the first support layer 331 and the second support layer 332.

The outer peripheral surface includes a first sub-outer peripheral surface and a second sub-outer peripheral surface. An end of the first side surface and an end of the second side surface in a direction perpendicular to a paper surface in FIG. 4 are connected by the first sub-outer peripheral surface. Another end of the first side surface and another end of the second side surface in the direction perpendicular to the paper surface in FIG. 4 are connected by the second sub-outer peripheral surface. The connection support layer may include a first sub-connection support layer and a second sub-connection support layer. An end of the first support layer 331 and an end of the second support layer are connected by the first sub-connection support layer. Another end of the first support layer 331 and another end of the second support layer 332 are connected by the second sub-connection support layer. The first sub-connection support layer corresponds to the first sub-outer peripheral surface. The second sub-connection support layer corresponds to the second sub-outer peripheral surface. It can be understood that the first support layer 331, the second support layer 332, and the connection support layer can be sleeved on the peripheral outside of the negative current collector 32.

In the above technical solution, the support layer 33 can be sleeved on a peripheral outside surface of the negative current collector 32. During the charging, the support layer 33 can limit the non-uniform growth of the metal deposition on the negative electrode plate on the circumferential side surface of the negative current collector 32 to prevent the non-uniform expansion of the negative current collector 32 in a circumferential direction of the negative current collector 32.

In some embodiments, the first support layer 331, the second support layer 332, and the connection support layer are integrally formed.

The first support layer 331, the second support layer 332, and the connection support layer may be made of a same material and manufactured through integrated molding to ensure consistency of physical properties of the first support layer 331, the second support layer 332, and the connection support layer, and allow the support layer 33 to exert a same restraining effect on the metal deposition thickness of each surface of the negative current collector 32. As a result, the metal deposition thickness of each surface of the negative current collector 32 toward the support layer 33 is the same during the charging, to ensure that the volume of the negative current collector 32 increases evenly.

In the above technical solution, the support layer 33 may be integrally formed to facilitate the production of the support layer 33. At the same time, the integrally formed support layer 33 can also ensure consistency of performance of the support layer 33 in all directions to avoid the non-uniform expansion of the negative current collector.

According to some embodiments of the present disclosure, an orthographic projection area of the support layer in the first direction X is greater than or equal to an orthographic projection area of the positive electrode plate in the first direction X.

A projection area S1 of the support layer 33 in the first direction X and a projection area S2 of the positive electrode plate 31 in the first direction X satisfy a relation expression: S1≥S2. It can be understood that the projection of the positive electrode plate 31 on the support layer 33 falls into the support layer 33.

In the above technical solution, the support layer 33 can separate the positive electrode plate 31 from the negative current collector 32. During the charging, the volume of the negative current collector 32 becomes larger. When the negative current collector 32 expands the support layer 33, since S1 ≥ S2, it can be ensured that when the support layer 33 expands outward and extrudes the positive electrode plate 31, the entire positive electrode plate 31 is extruded by the support layer 33, preventing tilting and a significant movement of the positive electrode plate 31 caused by a partial stress on the positive electrode plate 31, thereby improving stability of the positive electrode plate 31.

According to some embodiments of the present disclosure, the electrode assembly 30 further includes a separator disposed between the positive electrode plate 31 and the negative current collector 32 and configured to separate the positive electrode plate 31 and the negative current collector 32.

The support layer 33 may be disposed at a side of the separator facing away from the positive electrode plate 31. The separator may be a semipermeable film with an insulating function. The separator separates the positive electrode plate 31 and the negative current collector 32 to prevent a short circuit between the positive electrode plate 31 and the negative current collector 32. The metallic ions can pass through the separator, thus forming a charging and discharging circuit.

In the above technical solution, the separator can prevent the short circuit between the positive electrode plate 31 and the negative current collector 32, and allow the electrode assembly 30 to form the charging and discharging circuit to ensure the charging and discharging functions of the electrode assembly.

According to some embodiments of the present disclosure, the separator is integrally formed with the adjacent support layer.

The separator and the adjacent support layer 33 may be manufactured through the integral forming, and the separator and the support layer 33 may be one piece after the integral forming.

In the above technical solution, the integral forming of the separator and the support layer 33 can reduce a number of components of the electrode assembly 30 to facilitate the production of the electrode assembly 30.

In some embodiments, the support layer 33 and the separator are made of a same material.

The support layer 33 and the separator are made of the same material. The support layer 33 and the separator can allow the metallic ions to pass through and prevent the electrons from passing through, to ensure that the electrode assembly 30 can achieve the charging and discharging functions and avoid a short circuit in the electrode assembly 30. It can be understood that, the support layer 33 can reduce the irregular expansion of the negative electrode plate during the charging, and the separator can improve safety of the electrode assembly 30. When the support layer 33 is broken or fails, the separator can prevent the positive electrode piece 31 and the negative current collector 32 from short circuiting. Optionally, a material of the support layer 33 and the separator may be Polypropylene (PP), Polyethylene (PE), etc.

In the above technical solution, the support layer 33 and the separator are made of the same material to ensure that the electrode assembly can achieve the charging and discharging functions, and avoid the short circuit in the electrode assembly 30 to improve the safety of the electrode assembly.

According to some embodiments of the present disclosure, the support layer 33 has strength greater than or equal to strength of the separator.

Due to relatively high strength of the support layer 33, the support layer 33 is less prone to breakage and failure compared with the separator, thereby improving the reliability and service life of the support layer 33. It should be noted that the strength may be penetration resistance strength. When the cell 20 is penetrated by an external foreign object, the support layer 33 and the separator can provide dual isolation to prevent short circuit between the positive electrode plate 31 and the negative current collector 32. When one of the support layer 33 and the separator fails, another one of the support layer 33 and the separator can still prevent the short circuit between the positive electrode plate 31 and the negative current collector 32. In addition, during the charging, the metal deposition deposited on the negative current collector 32 may form dendritic crystal. If the dendritic crystal pierces the support layer 33 and the separator, it causes a short circuit between the positive electrode plate 31 and the negative current collector 32. The high-strength support layer 33 can prevent the support layer 33 from being pierced by the dendritic crystal, and therefore the support layer 33 can effectively protect the separator, prevent the dendritic crystal from penetrating the separator, and prevent thermal runaway in cell 20 that is caused by the short circuit between the positive electrode plate 31 and the negative current collector 32.

In the above technical solution, the strength of the support layer 33 is greater than or equal to the strength of the separator, which avoids the breakage and failure of the support layer 33, thereby improving the safety and the reliability of the electrode assembly 30.

According to some embodiments of the present disclosure, the support layer 33 is made of a macromolecule polymer.

The support layer 33 may be made of rubber, soft resin, modified polypropylene (PP), or modified polyethylene (PE).

In the above technical solution, the support layer 33 made of the macromolecule polymer has good strength, heat resistance, corrosion resistance, and electrical insulation to meet usage requirements of the electrode assembly 30.

According to some embodiments of the present disclosure, an initial thickness a of the support layer 33 and a thickness b of the negative current collector 32 in a fully charged state satisfy a relation expression: 1%≤a/b≤50%.

The initial thickness a of the support layer 33 may be a thickness of the support layer 33 when the support layer 33 has not elastically deformed. When the cell 20 is in a fully charged state, the cell 20 has a power of 100%. At this time, the thickness b of the negative current collector 32 and the initial thickness a of the support layer 33 satisfy the relation expression: 1%≤a/b≤50%, for example, a/b=1%, or a/b=5%, or a/b=10%, or a/b=30%, or a/b=50%. It should be noted that if a/b<1%, the thickness of the support layer 33 is thin, and the dendritic crystal generated by the negative current collector 32 during the charging may easily pierce the support layer 33, causing the support layer 33 to fail. If a/b>50%, the thickness of the support layer 33 is thicker, and the support layer 33 occupies a larger space, resulting in smaller energy density of the cell 20, affecting capacity of the cell 20.

In the above technical solution, the initial thickness a of the support layer 33 and the thickness b of the negative current collector 32 in the fully charged state satisfy the relation expression: 1%≤a/b≤50%, to reduce an impact of the support layer on the capacity of the cell 20 while ensuring the reliability of the support layer 33.

In some embodiments, an initial thickness a of the support layer and a thickness b of the negative current collector in a fully charged state further satisfy a relation expression: 2%≤a/b≤40%.

The relation between the initial thickness a of the support layer 33 and the thickness b of the negative current collector 32 in the fully charged state can be further determined based on design requirements and experiments. A value of a/b can be gradually reduced during the experiment to find a minimum value of a/b that satisfies the reliability of the support layer 33 to ensure the capacity of the cell 20.

In the above technical solution, the initial thickness a of the support layer 33 and the thickness b of the negative current collector 32 in the fully charged state satisfy the relation expression: 2%≤a/b≤40%, to further reduce the impact of the support layer 33 on the capacity of the cell 20 while ensuring the reliability of the support layer 33.

According to some embodiments of the present disclosure, the negative current collector 32 has a negative electrode active material layer formed at an outer surface of the negative current collector 32.

The negative electrode active material layer may be coated at a surface of the negative electrode current collector 32. A part of the negative electrode current collector 32 that is not coated with the negative electrode active material layer protrudes from a part that has been coated with the negative-electrode active material layer. The part that is not coated with the negative electrode active material layer serves as a negative electrode tab. A material of the negative current collector 32 may be copper, and the negative electrode active material may be carbon, silicon, etc.

In the above technical solution, the negative electrode active material layer is disposed on the outer surface of the negative current collector 32, and the active material layer can embed or extract the metallic ions to perform an electrochemical reaction on the electrode assembly 30.

According to some other embodiments of the present disclosure, the negative current collector 32 may further have no negative electrode active material layer formed at an outer surface of the negative current collector 32. The negative current collector 32 may include a substrate and a primer layer.

According to some embodiments of the present disclosure, the support layer 33 is elastic.

When the cell 20 is charged and the volume of the negative current collector 32 becomes larger, the support layer 33 expands synergistically with the increased volume of the negative current collector 32. When the cell 20 is discharged and the volume of the negative current collector 32 becomes smaller, the support layer 33 retracts synergistically with the decreased volume of the negative current collector 32.

In the above technical solution, the support layer 33 is elastic. During the charging, in response to the volume of the negative current collector 32 increasing due to the metal deposition on the negative current collector 32, the support layer is expanded by the negative current collector 32, and the support layer 33 elastically deforms and exerts the reaction force on the negative current collector 32. A part of the negative current collector 32 with a larger thickness of metal deposition receives a greater reaction force from the support layer 33, and a part of the negative current collector 32 with a smaller thickness of metal deposition receives a smaller reaction force from the support layer 33. Therefore, Under the condition that the support layer 33 constrains the negative current collector 32, the thickness of metal deposition at different parts of the negative current collector 32 tends to be consistent, ensuring that the volume of the negative current collector 32 increases uniformly.

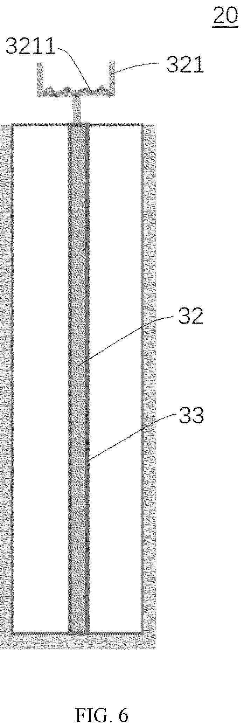

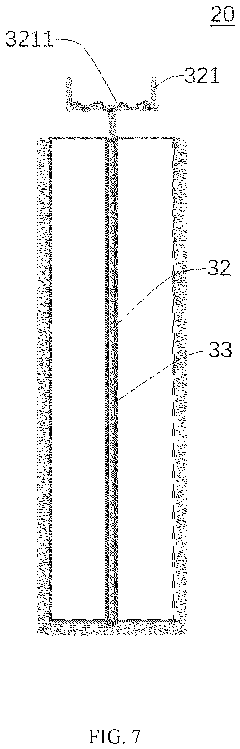

According to some embodiments of the present disclosure, referring to FIG. 6 and 7, the negative current collector 32 is provided with a tab 321. The tab 321 has a stretchable portion 3211 configured to provide space for stretching the tab 321.

The tab 321 may refer to a tab on one electrode assembly 30, or may refer to tabs of a plurality of electrode assemblies 30 that need to be stacked to each other. The tab 321 can be connected to external electrical equipment, and can export electric energy of the electrode assembly 30 to supply power to the external electrical equipment. The stretchable portion 3211 can at least stretch and retract in the first direction X, such that when the volume of the negative current collector 32 changes, the stress on the tab 321 can be reduced through the stretching and the retraction of the stretchable portion 3211.

In the above technical solution, the stretchable portion 3211 is disposed at the tab 321. When the volume of the negative current collector 32 changes, the stretchable portion 3211 can stretch and retract to maintain the electrical connection between the tab 321 and negative current collector 32, and prevent the cracks or even the breakage of the tab 321 generated by the pulling on the tab 321 due to the excessive expansion of the thickness of the electrode assembly 30, thereby improving reliability of the cell 20.

According to some embodiments of the present disclosure, referring to FIGS. 5 and 6, the stretchable portion 3211 includes at least one bending structure.

The bending structure can realize folding of a length of the tab 321, and provide the additional space for stretching the tab 321 when the electrode assembly 30 expands. The bending structure may be in a shape of at least one of a zigzag, an arc, a sine wave, or a square wave. The bending structure may have a retracted state and a stretched state. A length of the bending structure in the retracted state is smaller than its length in the stretched state. The bending structure can move freely during the expansion and the retraction of the negative current collector 32, and the stress on the tab 321 can be reduced through the stretching and retraction of the bending structure.

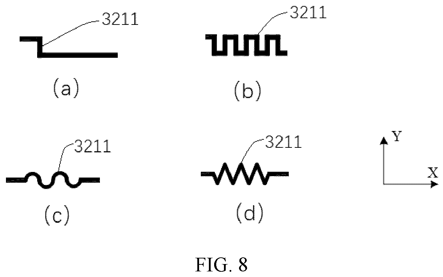

FIG. 8 shows several different configurations of the stretchable portion 3211. FIG. 8(a) is a schematic diagram showing the stretchable portion 3211 includes one bending structure. When the electrode assembly 30 expands, a part of the bending structure in a second direction Y can provide additional space for stretching the tab 321. The second direction Y is perpendicular to the first direction X. FIG. 8(b), FIG. 8(c), and FIG. 8(d) are schematic diagrams showing the stretchable portion 3211 includes a plurality of bending structures. In FIG. 8(b), the stretchable portion 3211 is formed by bending segments connected to each other in the first direction X and the second direction Y, and the bending structure of the stretchable portion 3211 has a square-wave shape. In FIG. 8(c), the stretchable portion 3211 is formed by a plurality of arc-shaped structures. In FIG. 8(d), the stretchable portion 3211 is formed by bending segments connected to each other in the first direction X, there is a certain angle between adjacent bending sections, and the bending structure of the stretchable portion 3211 has a zigzag shape. One bending structure can be regarded as a cycle of the stretchable portion 3211, and the stretchable portion 3211 can be formed by repeating a bending structure for several times. It should be understood that the present disclosure does not limit the shape of the bending structure.

The bending structure can realize the folding of the length of the tab 321 to provide the additional space for stretching the tab 321 when the electrode assembly 30 expands, and avoid the cracks or even the breakage of the tab 321 generated by the pulling on the tab 321 due to the excessive expansion of the thickness of the electrode assembly 30. In the above technical solution, the bending structure can realize the folding of the length of the tab 321 to provide the additional space for stretching the tab 321 when the volume of the negative current collector 32 changes, and avoid the cracks or even the breakage of the tab 321 generated by the pulling on the tab 321 due to the excessive volume change of the thickness of the negative current collector 32.

According to some embodiments of the present disclosure, the support layer 33 is sleeved on an outside surface of the negative current collector 32, and a tab 321 penetrates the support layer 33.

The support layer 33 has an insulation property, and an end of the tab 321 can penetrate the support layer 33 to be electrically connected to the negative current collector 32.

In the above technical solution, the tab can export the electric energy of the electrode assembly 30 and supply the power to the external electrical equipment.

According to some embodiments of the present disclosure, the present disclosure further provides a cell 20. The cell 20 includes the electrode assembly 30 of any of the above solutions.

According to some embodiments of the present disclosure, the present disclosure further provides a battery 100. The battery 100 includes the cell 20 of any of the above solutions.

According to some embodiments of the present disclosure, the present disclosure provides an electrical device. The electrical device includes the battery 100 of any of the above solutions.

The electrical device may be any of the aforementioned devices or systems using the battery 100.

According to some embodiments of the present disclosure, referring to FIGS. 4 to 8, the present disclosure provides an electrode assembly 30. The electrode assembly 30 includes a positive electrode plate 31, a negative current collector 32, and a support layer 33. The positive electrode plate 31 and the negative current collector 32 are arranged in a first direction X. In the first direction X, the negative current collector 32 has a first side surface, a second side surface opposite to the first side surface, and an outer peripheral surface connected between the first side surface and the second side surface. The support layer 33 is sleeved on an outside surface of the negative current collector 32. The support layer 33 includes a first support layer 331, a second support layer 332, and a connection support layer. The first support layer 331 and the second support layer 332 are disposed on the first side surface and the second side surface, respectively. The connection support layer is disposed on a peripheral surface. The support layer 33 is elastic. The negative current collector 32 is provided with a tab 321 having a stretchable portion 3211. The stretchable portion 3211 includes at least one bending structure.

Therefore, the support layer 33 sleeved on the outside surface of the negative current collector 32 can prevent the non-uniform expansion of the negative current collector 32 to reduce stress on the tab 321. At the same time, when the volume of the negative current collector 32 changes, the stretchable portion 3211 of the tab 321 can further reduce the stress on the tab 321 to prevent the tab 321 from being pulled and broken, and the safety accidents are avoided.

It should be noted that the embodiments of the present disclosure and features in the embodiments can be combined with each other without any conflict.

While the embodiments of the present disclosure have been described above, they are not intended to limit the present disclosure. For those skilled in the art, various changes and variations can be made to the present disclosure. Any modifications, equivalent substitutions, and improvements made within the spirit and principle of the present disclosure are to be encompassed by the scope of the claims of the present disclosure.

## Claims

1. An electrode assembly, comprising:
a positive electrode plate;
a negative current collector, the positive electrode plate and the negative current collector being arranged in a first direction, and the negative current collector having a first side surface and a second side surface opposite to the first side surface in the first direction; and
a support layer disposed on the negative current collector, at least part of the first side surface and/or at least part of the second side surface of the negative current collector being provided with the support layer.

2. The electrode assembly according to claim 1, wherein the support layer comprises a first support layer and a second support layer, the first support layer and the second support layer being disposed on the first side surface and the second side surface, respectively.

3. The electrode assembly according to claim 2, wherein the support layer is sleeved on an outside surface of the negative current collector.

4. The electrode assembly according to claim 3, wherein:
the support layer further comprises a connection support layer; and
the negative current collector further has an outer peripheral surface connected between the first side surface and the second side surface, the connection support layer being connected between the first support layer and the second support layer.

5. The electrode assembly according to claim 4, wherein the first support layer, the second support layer, and the connection support layer are integrally formed.

6. The electrode assembly according to claim 4, wherein an orthographic projection area of the support layer in the first direction is greater than or equal to an orthographic projection area of the positive electrode plate in the first direction.

7. The electrode assembly according to any one of claims 1 to 6, further comprising:
a separator disposed between the positive electrode plate and the negative current collector and configured to separate the positive electrode plate and the negative current collector.

8. The electrode assembly according to claim 7, wherein the separator is integrally formed with the adjacent support layer.

9. The electrode assembly according to claim 7 or 8, wherein the support layer and the separator are made of a same material.

10. The electrode assembly according to claim 7, wherein a strength of the support layer is greater than or equal to strength of the separator.

11. The electrode assembly according to any one of claims 1 to 10, wherein the support layer is made of a macromolecule polymer.

12. The electrode assembly according to any one of claims 1 to 11, wherein an initial thickness a of the support layer and a thickness b of the negative current collector in a fully charged state satisfy a relation expression: 1%≤a/b≤50%.

13. The electrode assembly according to claim 12, wherein the initial thickness a of the support layer and the thickness b of the negative current collector in the fully charged state further satisfy a relation expression: 2%≤a/b≤40%.

14. The electrode assembly according to any one of claims 1 to 13, wherein the negative current collector comprises a negative-electrode active material layer on an outer surface of the negative current collector.

15. The electrode assembly according to any one of claims 1 to 14, wherein the support layer is elastic.

16. The electrode assembly according to any one of claims 1 to 15, wherein the negative current collector comprises a tab, the tab having a stretchable portion configured to provide space for stretching the tab.

17. The electrode assembly according to claim 16, wherein the stretchable portion comprises at least one bending structure.

18. The electrode assembly according to claim 16, wherein the support layer is sleeved on an outside surface of the negative current collector, the tab penetrating the support layer.

19. A cell, comprising the electrode assembly according to any one of claims 1 to 18.

20. A battery, comprising the cell according to claim 19.

21. An electrical device, comprising the battery according to claim 20.
